# EUROPEAN PATENT SPECIFICATION

(11) **EP 4 546 760 B1**
(45) Date of publication and mention of the grant of the patent: **09.12.2026**
(21) Application number: 24173883.0
(22) Date of filing: 02.05.2024
(51) Int. Cl.: H04M 1/00, H04M 1/72448

(54) **CALLING METHOD, CALLING DEVICE AND STORAGE MEDIUM**
ANRUFVERFAHREN, ANRUFVORRICHTUNG UND SPEICHERMEDIUM
PROCÉDÉ D'APPEL, DISPOSITIF D'APPEL ET SUPPORT D'INFORMATIONS

(30) Priority: 26.10.2023 CN 202311398449
(43) Date of publication of application: 30.04.2025
(73) Proprietor: Beijing Xiaomi Mobile Software Co., Ltd., Beijing 100085 (CN)
(72) Inventor: ZHANG, Wenhao, Beijing, 100085 (CN)
(74) Representative: Stöckeler, Ferdinand

(56) References cited:
- EP-A1- 4 199 491
- CN-A- 116 264 600
- US-B2- 11 483 359

## Description

### FIELD

The present invention relates to the fields of interaction design, interconnection and intercommunication, and more particularly, to a calling method, a calling device, and a storage medium.

### BACKGROUND

With the popularization of electronic apparatuses such as terminals, people are no longer satisfied with answering incoming calls only through mobile phones. When a user is working on a computer, watching videos on a tablet or watching TV, and the user's mobile phone is not with him/her, the user cannot answer an incoming call, which degrades user experience.

In the related art, when the mobile phone has an incoming call, both the tablet and the computer can receive an incoming call notification, and the user can answer the incoming call using the tablet or the computer.

CN116264600A provides an incoming call reminding method, electronic equipment and a computer readable storage medium. The method comprises the steps: obtaining at least one piece of online equipment in a trust ring when first electronic equipment receives a first incoming call; the online equipment refers to trusted electronic equipment keeping communication with the first electronic equipment; acquiring states of the first electronic equipment and at least one piece of online equipment; the state comprises a first state and/or a second state; the first state is used for representing whether the electronic equipment is processing other incoming calls of the first electronic equipment; the second state is used for representing whether the electronic equipment is used and does not process the incoming call; determining a target device in the first electronic device and the at least one online device according to the states of the first electronic device and the at least one online device; the target device is used for performing incoming call reminding on the first incoming call. The method provided by the embodiment of the invention can reduce the power consumption of the equipment.

EP4199491A1 disclose a method and an apparatus of call implementation and a storage medium. The method includes: in response to detecting an incoming call event sent by a calling device, sending (11) a status message of the incoming call event to a relay device to enable the relay device prompts the incoming call event according to the status message; and after receiving a response message for the incoming call event from the relay device, transmitting (12) audio data through an audio connection between the called device and the relay device to implement a call between the relay device and the calling device.

US11483359B2 discloses a voice call method, device and system. The method includes establishing, by a first device, a Bluetooth link to a second device, receiving, by the first device, call request information sent by a third device, sending the call request information to a second device through the Bluetooth link, sending, by the first device in response to an answer command from the second device, the answer command to the third device, establishing, by the first device, a call with the third device, sending a downlink audio signal received from the third device to the second device, or sending and uplink audio signal received from the second device to the third device, and converting, by the first device, in response to a sound channel switching command and receiving a downlink audio signal sent by the third device, the downlink audio signal into a sound signal, and playing the sound signal.

### SUMMARY

In order to overcome the problems in the art, the present invention provides a calling method, a calling device, and a storage medium.

The present invention is defined in independent claims, and the preferable features according to the present invention are defined in the dependent claims. Any embodiment in the present disclosure that does not fall within the scope of the present invention should be regarded as an example for understanding the present invention.

According to a first aspect of embodiments of the present invention, a calling method is provided. The calling method includes: displaying an incoming call notification corresponding to an incoming call request on a first apparatus and one or more eligible second apparatuses, in response to receiving the incoming call request by the first apparatus, in which eligibility of the one or more eligible second apparatuses includes a communication connection established between the first apparatus and the one or more eligible second apparatuses and operability on the incoming call request by the one or more eligible second apparatuses; and transferring a call corresponding to the incoming call request to a target apparatus and answering the call on the target apparatus, in response to determining, by the first apparatus, that the incoming call request is to be answered on the target apparatus in a case that the incoming call notification is received on the target apparatus, in which the target apparatus is the first apparatus or any of the one or more eligible second apparatuses.

In an embodiment, displaying the incoming call notification corresponding to the incoming call request on the first apparatus and the one or more eligible second apparatuses includes: in response to the first apparatus displaying the incoming call notification corresponding to the incoming call request, sending a first request to the one or more eligible second apparatuses to display the incoming call notification corresponding to the incoming call request on the one or more eligible second apparatuses, in which the first request requests display of the incoming call notification.

In an embodiment, the target apparatus is any of the one or more eligible second apparatuses, and answering the call on the target apparatus includes: collecting far-end audio data of the call based on a sound collection device of the first apparatus, and sending the far-end audio data to the target apparatus, to enable the target apparatus to invoke a sound playing device of the target apparatus to play the far-end audio data and invoke a sound collection device of the target apparatus to collect near-end audio data of the call; and obtaining the near-end audio data of the call collected by the sound collection device of the target apparatus, and sending the near-end audio data to a far-end apparatus of the call.

In an embodiment, the calling method further includes: stopping display of the incoming call notification on an apparatus other than the target apparatus among the first apparatus and the one or more eligible second apparatuses, and displaying an icon on the first apparatus, in response to determining, by the first apparatus, that the incoming call request is answered on the target apparatus in the case that the incoming call notification is received on the target apparatus, in which the icon represents that the call is running in background.

In an embodiment, the calling method further includes: displaying a call interface on the first apparatus in response to detecting that the icon is selected, in which the call interface includes a first controller configured to display and/or switch an apparatus in a current call; displaying an apparatus list in response to the first controller being selected, in which the apparatus list includes a third apparatus for a user to select for call transfer, and the third apparatus includes the one or more eligible second apparatuses; and transferring the current call to the third apparatus and answering the call on the third apparatus, in response to that the third apparatus in the apparatus list is selected.

In an embodiment, the eligibility includes at least one of: the one or more eligible second apparatuses sharing a same account with the first apparatus; Bluetooth of the one or more eligible second apparatuses and Bluetooth of the first apparatus being in an open state and within a discoverable range; the one or more eligible second apparatuses and the first apparatus being in a same local area network; or the first apparatus communicating with the one or more eligible second apparatuses through a network system.

In an embodiment, the communication between the first apparatus and the one or more eligible second apparatuses through the network system includes that the first apparatus and the one or more eligible second apparatuses perform secure transmission of call instructions, messages, and audio data based on a soft bus; discovery of the one or more eligible second apparatuses; and perform transfer of related data.

In an embodiment, the target apparatus is one second apparatus selected from the one or more eligible second apparatuses, and displaying the incoming call notification corresponding to the incoming call request includes: receiving a first request sent by the first apparatus, in response to the first apparatus displaying the incoming call notification corresponding to the incoming call request, in which the first request requests display of the incoming call notification; and displaying the incoming call notification corresponding to the incoming call request on the one second apparatus, in response to the first request.

In an embodiment, answering the call on the target apparatus includes: receiving far-end audio data sent by the first apparatus, in which the far-end audio data is far-end audio data of the call collected by a sound collection device of the first apparatus; invoking a sound playing device of the one second apparatus to play the far-end audio data, and invoking a sound collection device of the one second apparatus to collect near-end audio data of the call; and sending the near-end audio data of the call collected by the sound collection device of the one second apparatus to a far-end apparatus of the call through the first apparatus.

In an embodiment, the calling method further includes: transferring a current call to a third apparatus and answering the call on the third apparatus, in response to that the third apparatus in an apparatus list of a first controller of the first apparatus is selected, in which the first controller is configured to display and/or switch an apparatus in the current call, the apparatus list includes the third apparatus for a user to select for call transfer, and the third apparatus includes one or more second apparatuses.

In an embodiment, a telephone collaboration service of the first apparatus sends the incoming call request to the one or more eligible second apparatuses; a telephone collaboration service of the one or more eligible second apparatuses sends request information to an incoming call display interface; and the incoming call notification is displayed on the incoming call display interface of the one or more eligible second apparatuses.

In an embodiment, the calling method further includes: displaying a call status bar on the first apparatus, and clicking the call status bar to switch to any of the one or more eligible second apparatuses.

In an embodiment, the calling method further includes: in response to the call being answered on one second apparatus of the one or more eligible second apparatuses, invoking a microphone and a speaker corresponding to the first apparatus and the one second apparatus through a virtualization audio apparatus service corresponding to the first apparatus and the one second apparatus.

According to a second aspect of embodiments of the present invention, there is provided a calling device, including: a processor; and a memory for storing instructions executable by the processor. The processor is configured to execute the instructions to execute the calling method according to the first aspect or any one of the embodiments of the first aspect.

According to a third aspect of embodiments of the present invention, there is provided a storage medium having stored therein instructions that, when executed by a processor of a terminal, cause the terminal to execute the calling method according to the first aspect or any one of the embodiments of the first aspect.

The technical solutions according to the embodiments of the present invention have the following beneficial effects. The first apparatus receives the incoming call request, and the incoming call notification is displayed on the first apparatus and the one or more eligible second apparatuses. The first apparatus or any of the second apparatuses i.e., the target apparatus is intended to pick up the call. The call corresponding to the incoming call request is transferred to the target apparatus and is answered on the target apparatus. Consequently, call transfer between the first apparatus and the one or more eligible second apparatuses can be achieved.

It should be understood that the general description above and the detailed description later are only illustrative and explanatory and do not limit the present invention.

### BRIEF DESCRIPTION OF DRAWINGS

The accompanying drawings, which are incorporated in and constitute a part of this specification, illustrate embodiments consistent with the present invention and together with the description, serve to explain the principles of the present invention.
Fig. 1 is a flow chart of a calling method according to an embodiment of the present invention.
Fig. 2 is a schematic diagram of a tablet and a computer nearby with a same account being notified when a mobile phone receives an incoming call, according to an embodiment of the present invention.
Fig. 3 is a flow chart of a calling method according to an embodiment of the present invention.
Fig. 4 is a schematic diagram of a mobile phone and a tablet after a computer answers according to an embodiment of the present invention.
Fig. 5 is a flow chart of a calling method according to an embodiment of the present invention.
Fig. 6 is a flow chart of a calling method according to an embodiment of the present invention.
Fig. 7 is a flow chart of a calling method according to an embodiment of the present invention.
Fig. 8 is a flow chart of a calling method according to an embodiment of the present invention.
Fig. 9 is a schematic diagram of switching an answering apparatus on a mobile phone according to an embodiment of the present invention.
Fig. 10 is a schematic diagram of switching an answering apparatus on a mobile phone according to an embodiment of the present invention.
Fig. 11 is a block diagram of a calling method according to an embodiment of the present invention.
Fig. 12 is a block diagram of a calling device according to an embodiment of the present invention.
Fig. 13 is a block diagram of a calling device according to an embodiment of the present invention.
Fig. 14 is a block diagram of a calling device according to an embodiment of the present invention.
Fig. 15 is a block diagram of a calling device according to an embodiment of the present invention.

### DETAILED DESCRIPTION

Embodiments of the present invention are described in detail below, and examples of the embodiments are shown in accompanying drawings. In the description with reference to the drawings, unless otherwise indicated, the same numbers in different drawings indicate the same or similar elements. Embodiments described below do not represent all possible embodiments consistent with the present invention.

In the related art, both a tablet and a computer can receive an incoming call notification when a mobile phone has an incoming call, and the tablet and the computer can be used to answer the incoming call of the mobile phone. However, it does not support free switch among the mobile phone, the tablet, and the computer during an answering process.

Accordingly, embodiments of the present invention provide a calling method that uses a nearest apparatus to answer a phone call. During the answering process, free switch among a plurality of apparatuses can be achieved, improving user experience.

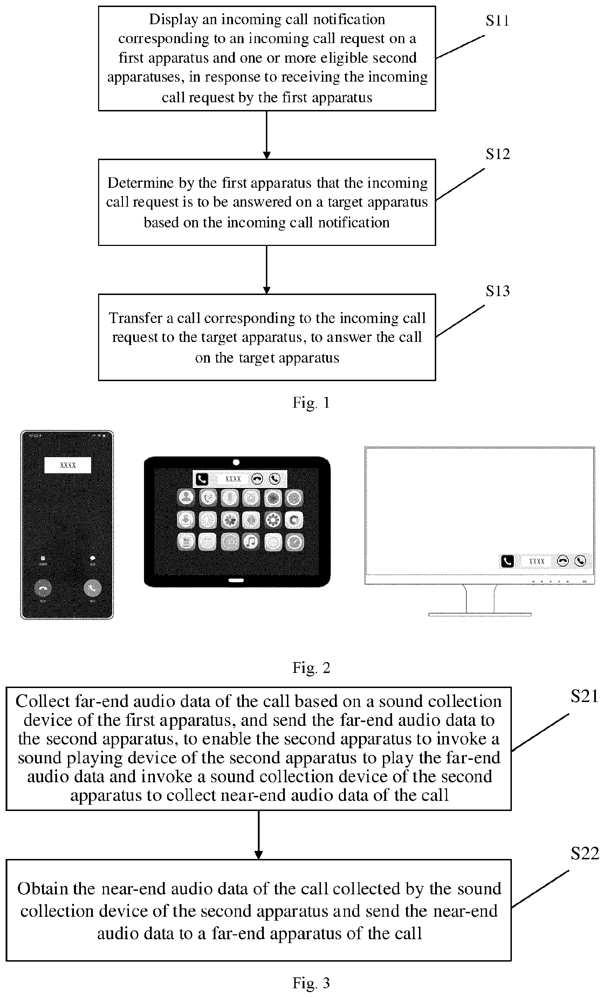

Fig. 1 is a flow chart of a calling method according to an embodiment of the present invention. As shown in Fig. 1, the calling method includes the following steps.

In step S11, an incoming call notification corresponding to an incoming call request is displayed on a first apparatus and one or more eligible second apparatuses, in response to receiving the incoming call request by the first apparatus.

In the embodiments of the present invention, the first apparatus receives the incoming call request, and the incoming call notification corresponding to the incoming call request is displayed on the first apparatus and the one or more eligible second apparatuses.

Fig. 2 is a schematic diagram of a tablet and a computer nearby with a same account being notified when a mobile phone receives an incoming call, according to an embodiment of the present invention. As shown in Fig. 2, interaction among the mobile phone, the tablet, and the computer is presented. The mobile phone receives the incoming call notification, and both the tablet and the computer will also receive the incoming call notification.

In the embodiments of the present invention, eligibility of the one or more eligible second apparatuses includes a communication connection established between the first apparatus and the one or more eligible second apparatuses and operability on the incoming call request by the one or more eligible second apparatuses.

In step S12, the first apparatus determines that the incoming call request is to be answered on a target apparatus based on the incoming call notification.

In the embodiments of the present invention, the target apparatus is the first apparatus or any of the one or more eligible second apparatuses.

In the embodiments of the present invention, the first apparatus determines that the incoming call is to be answered by the first apparatus or any of the second apparatuses.

In step S13, a call corresponding to the incoming call request is transferred to the target apparatus, to answer the call on the target apparatus.

In embodiments of the present invention, if the first apparatus answers, the call will be taken on the first apparatus; if any of the second apparatuses answers, the call corresponding to the incoming call request will be transferred to the corresponding second apparatus, and the call will be taken on the second apparatus.

In embodiments of the present invention, by transferring the call corresponding to the incoming call request to the target apparatus, it is achieved to answer the call corresponding to the incoming call request on any of the second apparatuses.

The interaction among the mobile phone, the tablet, and the computer is presented as an example. When the mobile phone receives the incoming call notification and the phone is answered by the mobile phone, the computer or the tablet can be chosen to answer the phone during the answering. When the phone is answered by the tablet, the computer can be chosen to answer the phone through the mobile phone. When the incoming call notification is received and the phone is answered by the computer, the tablet can be chosen to answer the phone through the mobile phone during the answering.

In an embodiment, when the mobile phone receives the incoming call notification and the phone is answered by the mobile phone, the computer or the tablet can be chosen to answer the phone during the answering. If the tablet is chosen to answer the phone. Firstly, the tablet can continue to control the computer to answer the phone. Secondly, the computer can continue to control the mobile phone to answer the phone. On the contrary, if the computer is chosen to answer the phone. Firstly, the computer can continue to control the tablet to answer the phone. Secondly, the tablet can continue to control the phone to answer the phone. I.e., the process of answering the phone can freely transfer between the mobile phone, the tablet, and the computer.

In embodiments of the present invention, in response to that the first apparatus displays the incoming call notification corresponding to the incoming call request, a first request is sent to the one or more eligible second apparatuses to display the incoming call notification corresponding to the incoming call request on the one or more eligible second apparatuses, in which the first request requests display of the incoming call notification.

In embodiments of the present invention, the one or more eligible second apparatuses share a same account with the first apparatus; Bluetooth of the one or more eligible second apparatuses and Bluetooth of the first apparatus are in an open state and within a discoverable range; the one or more eligible second apparatuses and the first apparatus are in a same local area network; or the first apparatus communicates with the one or more eligible second apparatuses through a network system. The communication between the first apparatus and the second apparatus through the network system means that the first apparatus and the second apparatus perform secure transmission of call instructions, messages, and audio data based on a Tianqin soft bus, discovery of one or more eligible second apparatuses, and perform transfer of related data.

The interaction among the mobile phone, the tablet, and the computer is presented as an example. The mobile phone, the tablet and the computer share the same account, and Bluetooth of the mobile phone, that of the tablet and that of the computer are all in the open state and within a discoverable range, or the mobile phone, the tablet and the computer are within the same local area network. The mobile phone receives the incoming call notification and sends the first request to the tablet and the computer, and the corresponding incoming call notification is displayed on the tablet and the computer.

In embodiments of the present invention, a telephone collaboration service of the first apparatus sends the incoming call request to the one or more eligible second apparatuses. A telephone collaboration service of the one or more eligible second apparatuses sends request information to an incoming call display interface, and the incoming call notification is displayed on the incoming call display interface of the one or more eligible second apparatuses.

The interaction among the mobile phone, the tablet, and the computer is presented as an example. Both the mobile phone and the tablet have a phone application, an application which is able to answer a phone can be installed on the computer to achieve a call functionality. If the computer has a phone application in future, it is also applicable.

In embodiments of the present invention, restricting the second apparatus to share the same account with the first apparatus can determine that it is a user's private apparatus, avoiding displaying the notification message on other user's apparatuses.

Fig. 3 is a flow chart of a calling method according to an embodiment of the present invention. As shown in Fig. 3, the calling method includes the following steps.

In step S21, far-end audio data of the call is collected based on a sound collection device of the first apparatus, and the far-end audio data is sent to the second apparatus, to enable the second apparatus to invoke a sound playing device of the second apparatus to play the far-end audio data and invoke a sound collection device of the second apparatus to collect near-end audio data of the call.

In embodiments of the present invention, if any eligible second apparatus answers the incoming call, a microphone and a speaker corresponding to the first apparatus and the second apparatus are invoked through a virtualization audio apparatus service corresponding to the first apparatus and the second apparatus. The near-end audio data is the audio data of the first apparatus, and the far-end audio data is the audio data of a far-end apparatus that is calling with the first apparatus.

In embodiments of the present invention, the far-end audio data of the call collected by the microphone of the first apparatus is sent to the microphone of the second apparatus. The remote audio information of the call received by the microphone of the first apparatus is played through the speaker of the second apparatus. The audio information at the second apparatus is collected through the microphone of the second apparatus.

In step S22, the near-end audio data of the call collected by the sound collection device of the second apparatus is obtained and sent to a far-end apparatus of the call.

In embodiments of the present invention, the audio information at the second apparatus collected by the microphone of the second apparatus is sent to the microphone of the first apparatus. The first apparatus sends the audio information collected by the second apparatus received by the microphone of the first apparatus to the far-end apparatus communicating with the first apparatus.

In embodiments of the present invention, display of the incoming call notification on another apparatus is stopped, and an icon is displayed on the first apparatus, in response to determining, by the first apparatus, that the incoming call request is answered on the target apparatus based on the incoming call notification.

In embodiments of the present invention, the second apparatus is not limited to a tablet, a computer, a wearable apparatus, etc. Any apparatus that shares the same account with the mobile phone, is within a discoverable range of Bluetooth, or is within the same local area network can serve as the second apparatus to achieve the purpose of the present invention.

In embodiments of the present invention, another apparatus is an apparatus other than the target apparatus among the first apparatus and the one or more eligible second apparatuses.

In embodiments of the present invention, the icon represents that the call is running in background.

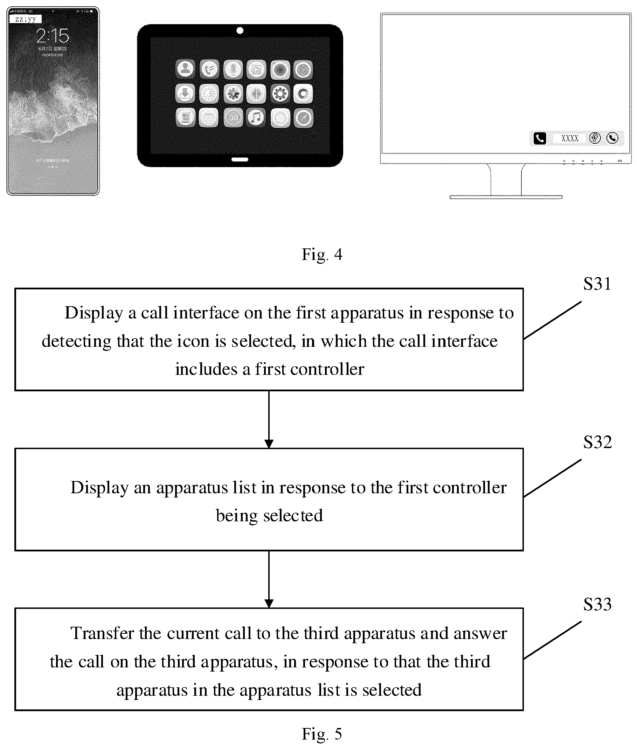

The interaction among the mobile phone, the tablet, and the computer is presented as an example. Fig. 4 is a schematic diagram of the mobile phone and the tablet after the computer answers according to an embodiment of the present invention. As shown in Fig. 4, the mobile phone determines that the incoming call has been answered by the eligible computer. A connection sign is displayed on the computer, and the incoming call notification on other apparatus i.e., the tablet is stopped. A mobile phone call interface is pushed to the background, i.e., a call status bar is displayed on the mobile phone, where "zz:yy" shown in the call status bar represents a duration of the call.

In embodiments of the present invention, the call status bar is displayed on the first apparatus. When needing to switch to the other apparatus, the call status bar can be clicked to switch to the other apparatus.

Fig. 5 is a flow chart of a calling method according to an embodiment of the present invention. As shown in Fig. 5, the calling method includes the following steps.

In step S31, a call interface is displayed on the first apparatus in response to detecting that the icon is selected. The call interface includes a first controller.

In embodiments of the present invention, the first controller is configured to display and/or switch an apparatus in a current call.

In embodiments of the present invention, the call status bar is clicked, and the first apparatus displays the call interface. The other apparatus can be switched to answer the call, in the call interface.

In step S32, an apparatus list is displayed in response to the first controller being selected.

In embodiments of the present invention, the apparatus list includes a third apparatus for a user to select for call transfer, and the third apparatus includes the one or more eligible second apparatuses.

In step S33, the current call is transferred to the third apparatus and the call is answered on the third apparatus, in response to that the third apparatus in the apparatus list is selected.

In embodiments of the present invention, when the other apparatus is answered, the first apparatus displays the call status bar. The first apparatus displays the call interface by clicking the call status bar. The first controller for switching to the other apparatus for answering is included in the call interface, thereby achieving the switch to other apparatus.

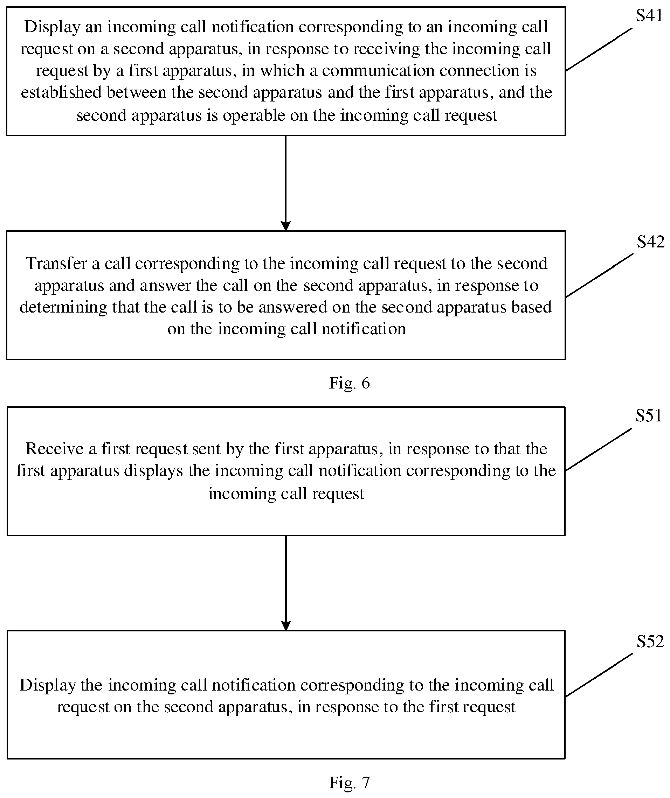

Fig. 6 is a flow chart of a calling method according to an embodiment of the present invention. As shown in Fig. 6, the calling method includes the following steps.

In step S41, an incoming call notification corresponding to an incoming call request is displayed on a second apparatus, in response to receiving the incoming call request by a first apparatus, in which a communication connection is established between the second apparatus and the first apparatus, and the second apparatus is operable on the incoming call request.

In an embodiment, the communication connection is established between the mobile phone, the tablet and the computer. The mobile phone receives the incoming call request, and the incoming call notification is displayed on the tablet and the computer.

In step S42, a call corresponding to the incoming call request is transferred to the second apparatus and answered on the second apparatus, in response to determining that the call is to be answered on the second apparatus based on the incoming call notification.

In an embodiment, the mobile phone or the tablet is intended to answer the call. The call corresponding to the incoming call request is transferred to the mobile phone or the tablet, to answer the call on the mobile phone or the tablet.

In embodiments of the present invention, by transferring the call corresponding to the incoming call request to the second apparatus, it is possible to answer the call on other apparatuses other than the first apparatus, achieving the switch of the call between the second apparatus and the first apparatus.

Fig. 7 is a flow chart of a calling method according to an embodiment of the present invention. As shown in Fig. 7, the calling method includes the following steps.

In step S51, a first request sent by the first apparatus is received, in response to that the first apparatus displays the incoming call notification corresponding to the incoming call request.

In embodiments of the present invention, the first request requests display of the incoming call notification.

In step S52, the incoming call notification corresponding to the incoming call request is displayed on the second apparatus, in response to the first request.

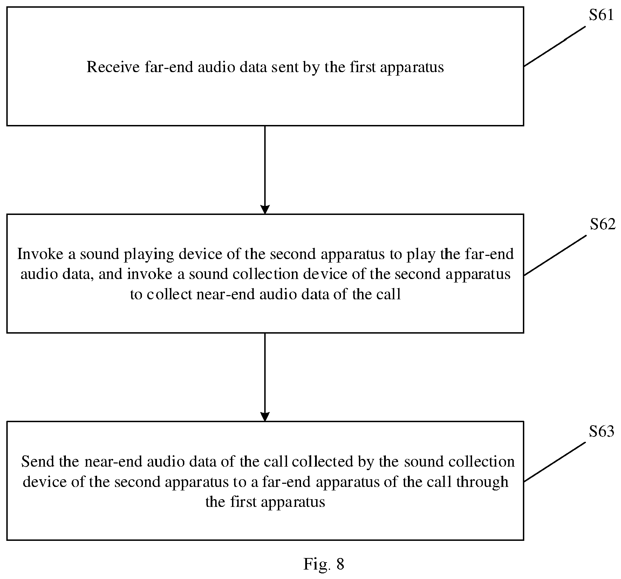

Fig. 8 is a flow chart of a calling method according to an embodiment of the present invention. As shown in Fig. 8, the calling method includes the following steps.

In step S61, far-end audio data sent by the first apparatus is received.

In embodiments of the present invention, the far-end audio data is far-end audio data of the call collected by a sound collection device of the first apparatus.

In an embodiment, the tablet or the computer receives the audio data of the apparatus that communicates with the mobile phone through the microphone, i.e., the far-end audio data. The far-end audio data is collected based on the microphone of the mobile phone.

In step S62, a sound playing device of the second apparatus is invoked to play the far-end audio data, and a sound collection device of the second apparatus is invoked to collect near-end audio data of the call.

In an embodiment, the speaker of the tablet or the computer is invoked to play far-end audio data, and the microphone of the tablet or the computer is invoked to collect the near-end audio data of the call.

In step S63, the near-end audio data of the call collected by the sound collection device of the second apparatus is sent, so that the first apparatus sends the near-end audio data to a far-end apparatus of the call.

In an embodiment, the near-end audio data of the call collected by the microphone of the tablet or the computer is sent to the far-end apparatus that makes the call to the mobile phone.

In embodiments of the present invention, by the interaction of the audio data among the second apparatus, the first apparatus, and the far-end apparatus, the transfer of the call between the first apparatus and the second apparatus is achieved, thereby improving user experience.

In embodiments of the present invention, a current call is transferred to a third apparatus and answering the call on the third apparatus, in response to that the third apparatus in an apparatus list of a first controller of the first apparatus is selected. The first controller is configured to display and/or switch an apparatus in the current call. The apparatus list includes the third apparatus for a user to select for call transfer, and the third apparatus includes one or more second apparatuses.

In an embodiment, click a button on the call interface of the mobile phone for switching the calling apparatus, and select any apparatus in the apparatus list. At this time, the current call will be transferred to the corresponding apparatus, i.e., the selected apparatus, and taking the call by the current selected apparatus.

In embodiments of the present invention, switching of the apparatus is performed based on the first controller of the first apparatus, making it more convenient to switch the apparatus or the call, improving user's experience.

In embodiments of the present invention, the second apparatus shares the same account with the first apparatus. Bluetooth of the second apparatus and Bluetooth of the first apparatus are in an open state and within a discoverable range. The second apparatus and the first apparatus are in a same local area network. The first apparatus communicates with the second apparatus through a network system.

In embodiments of the present invention, the second apparatus shares the same account with the first apparatus. Bluetooth of the second apparatus and Bluetooth of the first apparatus are in an open state and within a discoverable range. The second apparatus and the first apparatus are in a same local area network. The first apparatus communicates with the second apparatus through a network system. The communication between the first apparatus and the second apparatus through the network system means that the first apparatus and the second apparatus perform secure transmission of call instructions, messages, and audio data based on a Tianqin soft bus, discovery of one or more eligible second apparatuses, and perform transfer of related data.

The interaction among the mobile phone, the tablet, and the computer is presented as an example.

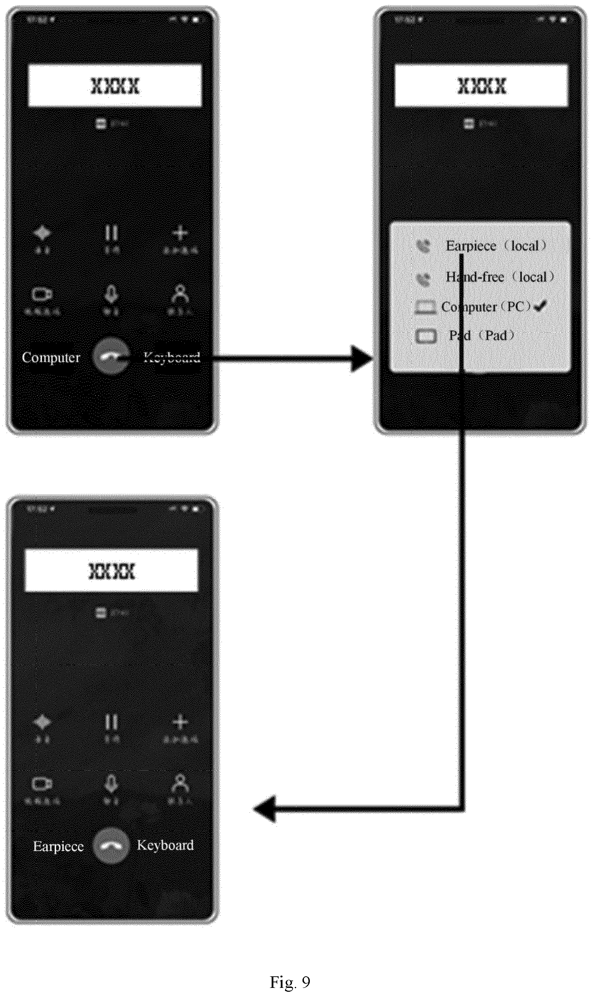

Fig. 9 is a schematic diagram of switching an answering apparatus on a mobile phone according to an embodiment of the present invention. As shown in Fig. 9, the computer is in an answering state. The first controller of the mobile phone is clicked to display the apparatus list, and an earpiece of the mobile phone, a speaker of the mobile phone, the computer or the tablet can be selected to playback. The figure shows a schematic diagram of using the earpiece of the mobile phone to answer the call when selecting the earpiece of the mobile phone.

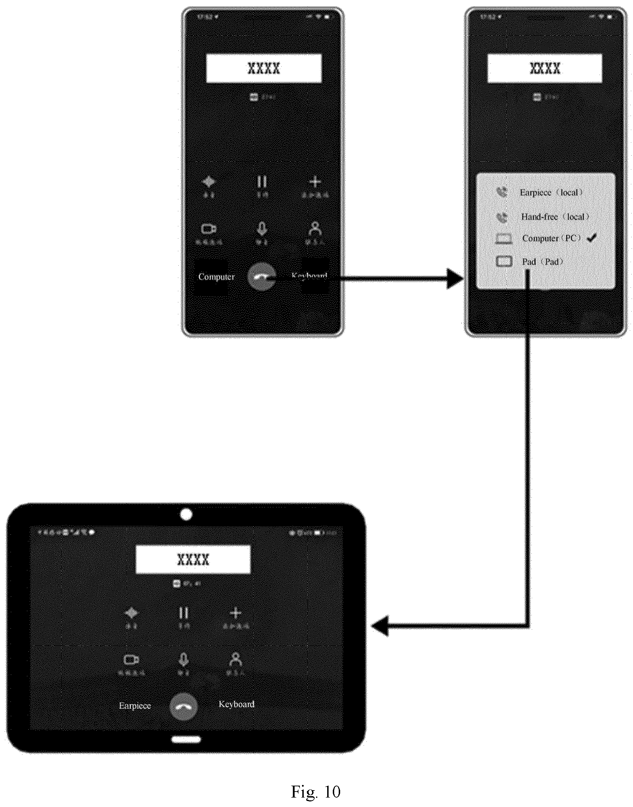

Fig. 10 is a schematic diagram of switching an answering apparatus on a mobile phone according to an embodiment of the present invention. As shown in Fig. 10, the computer is in an answering state. The first controller of the mobile phone is clicked to display the apparatus list, then an earpiece of the mobile phone, a speaker of the mobile phone, the computer or the tablet can be selected to playback. The figure shows a schematic diagram of using the tablet to answer the call when selecting the tablet.

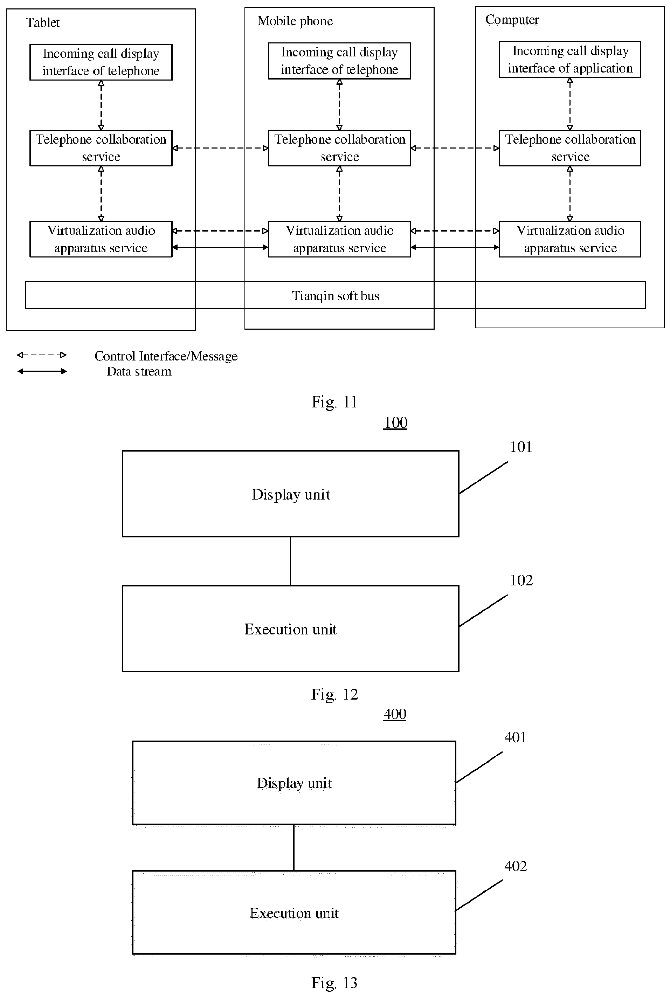

Fig. 11 is a block diagram of a calling method according to an embodiment of the present invention. As shown in Fig. 11, the calling method includes: a telephone collaboration service: call local management in combination with collaborative management of call messages and apparatus switching; a virtual audio apparatus service: recording the incoming call by a client, collecting sound of a speaker and a microphone at a server, achieving capability sharing between the client and the server through a soft bus, and ensuring secure encryption of shared content; and a Tianqin soft bus: secure transmission of call instructions, messages, and audio data streams.

In embodiments of the present invention, the discovery among apparatuses and the transfer of data are achieved based on the Tianqin soft bus. The first apparatus receives the incoming call request and sends the telephone collaboration service of the first apparatus to the telephone collaboration service of the one or more eligible second apparatuses. The telephone collaboration service of the one or more eligible second apparatuses sends the request to a corresponding upper layer phone display interface of the second apparatus for displaying the incoming call notification. The telephone collaboration service receives audio data based on the microphone and the speaker of the virtual audio apparatus and makes calls sequentially.

Based on the same concept, embodiments of the present invention also provide a calling device.

It can be understood that the application display device according to embodiments of the present invention includes corresponding hardware structures and/or software modules for executing various functions in order to realize the above functions. Combining the units and algorithm steps of various examples disclosed in embodiments of the present invention, embodiments of the present invention can be realized in the form of hardware or a combination of hardware and computer software. Whether a function is executed by hardware or computer software drives hardware depends on the specific application and design constraints of the technical solution. Those skilled in the art can use different methods to realize the described functions for each specific application, while this realization should not be considered beyond the scope of the technical solution of the disclosed embodiments.

Fig. 12 is a block diagram of a calling device 100 according to an embodiment of the present invention. Referring to Fig. 12, the device 100 includes a display unit 101 and an execution unit 102.

The display unit 101 is configured to display an incoming call notification corresponding to an incoming call request on a first apparatus and one or more eligible second apparatuses, in response to receiving the incoming call request by the first apparatus, in which eligibility of the one or more eligible second apparatuses includes a communication connection established between the first apparatus and the one or more eligible second apparatuses and operability on the incoming call request by the one or more eligible second apparatuses. The execution unit 102 is configured to transfer a call corresponding to the incoming call request to a target apparatus and answer the call on the target apparatus, in response to determining, by the first apparatus, that the incoming call request is to be answered on the target apparatus based on the incoming call notification, in which the target apparatus is the first apparatus or any of the one or more eligible second apparatuses.

In an embodiment, the display unit 101 displays the incoming call notification corresponding to the incoming call request on the first apparatus and the one or more eligible second apparatuses by: in response to that the first apparatus displays the incoming call notification corresponding to the incoming call request, sending a first request to the one or more eligible second apparatuses to display the incoming call notification corresponding to the incoming call request on the one or more eligible second apparatuses, in which the first request requests display of the incoming call notification.

In an embodiment, the target apparatus is any of the one or more eligible second apparatuses, and the execution unit answers the call on the target apparatus by: collecting far-end audio data of the call based on a sound collection device of the first apparatus, and sending the far-end audio data to the target apparatus, to enable the target apparatus to invoke a sound playing device of the target apparatus to play the far-end audio data and invoke a sound collection device of the target apparatus to collect near-end audio data of the call; and obtaining the near-end audio data of the call collected by the sound collection device of the target apparatus, and sending the near-end audio data to a far-end apparatus of the call.

In an embodiment, the display unit 101 is further configured to stop display of the incoming call notification on an apparatus other than the target apparatus among the first apparatus and the one or more eligible second apparatuses, and display an icon on the first apparatus, in response to determining, by the first apparatus, that the incoming call request is answered on the target apparatus based on the incoming call notification. The icon represents that the call is running in background.

In an embodiment, the execution unit 102 is further configured to display a call interface on the first apparatus in response to detecting that the icon is selected, in which the call interface includes a first controller configured to display and/or switch an apparatus in a current call; display an apparatus list in response to the first controller being selected, in which the apparatus list includes a third apparatus for a user to select for call transfer, and the third apparatus includes the one or more eligible second apparatuses; and transfer the current call to the third apparatus and answer the call on the third apparatus, in response to that the third apparatus in the apparatus list is selected.

In an embodiment, the eligibility includes at least one of: the one or more eligible second apparatuses sharing a same account with the first apparatus; Bluetooth of the one or more eligible second apparatuses and Bluetooth of the first apparatus being in an open state and within a discoverable range; the one or more eligible second apparatuses and the first apparatus being in a same local area network; or the first apparatus communicating with the one or more eligible second apparatuses through a network system.

Fig. 13 is a block diagram of a calling device 400 according to an embodiment of the present invention. Referring to Fig. 13, the device 100 includes a display unit 401 and an execution unit 402.

The display unit 401 is configured to display an incoming call notification corresponding to an incoming call request on a second apparatus, in response to receiving the incoming call request by a first apparatus, in which a communication connection is established between the second apparatus and the first apparatus, and the second apparatus is operable on the incoming call request. The execution unit 402 is configured to transfer a call corresponding to the incoming call request to the second apparatus and answer the call on the second apparatus, in response to determining that the call is to be answered on the second apparatus based on the incoming call notification.

In an embodiment, the display unit 401 displays the incoming call notification corresponding to the incoming call request on the second apparatus, in response to receiving the incoming call request by the first apparatus, by: receiving a first request sent by the first apparatus, in response to that the first apparatus displays the incoming call notification corresponding to the incoming call request, in which the first request requests display of the incoming call notification; and displaying the incoming call notification corresponding to the incoming call request on the second apparatus, in response to the first request.

In an embodiment, the execution unit 402 answers the call on the second apparatus by: receiving far-end audio data sent by the first apparatus, in which the far-end audio data is far-end audio data of the call collected by a sound collection device of the first apparatus; invoking a sound playing device of the second apparatus to play the far-end audio data, and invoking a sound collection device of the second apparatus to collect near-end audio data of the call; and sending the near-end audio data of the call collected by the sound collection device of the second apparatus to a far-end apparatus of the call through the first apparatus.

In an embodiment, the execution unit 402 is further configured to transfer a current call to a third apparatus and answer the call on the third apparatus, in response to that the third apparatus in an apparatus list of a first controller of the first apparatus is selected, in which the first controller is configured to display and/or switch an apparatus in the current call, the apparatus list includes the third apparatus for a user to select for call transfer, and the third apparatus includes one or more second apparatuses.

In an embodiment, the second apparatus satisfies at least one of the following conditions: the second apparatus sharing a same account with the first apparatus; Bluetooth of the second apparatus and Bluetooth of the first apparatus being in an open state and within a discoverable range; the second apparatus and the first apparatus being in a same local area network; or the first apparatus communicating with the second apparatus through a network system.

Regarding the device in the above embodiments, specific manners in which each module executes operations have been described in detail in the embodiments related to the method, and will not be elaborated here.

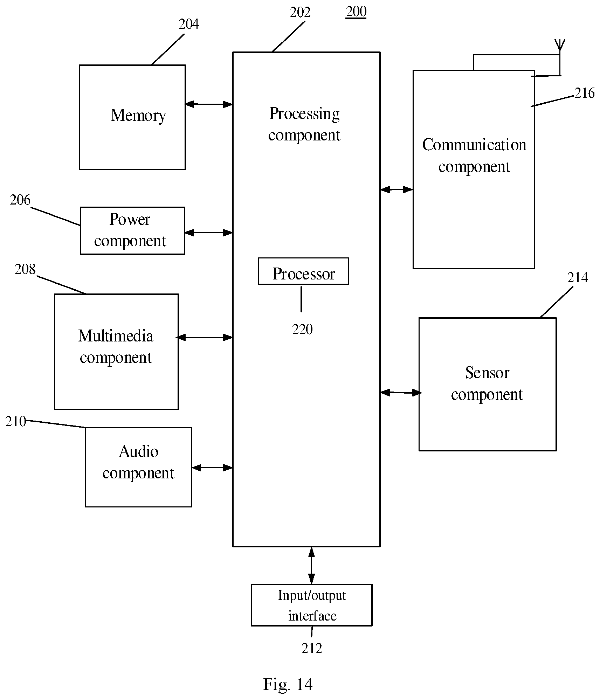

Fig. 14 is a block diagram of a calling device 200 according to an embodiment of the present invention. The device 200 can be provided as a terminal. For example, the device 200 can be a mobile phone, a computer, a digital broadcasting terminal, a message sending and receiving apparatus, a game console, a tablet apparatus, a medical apparatus, a fitness apparatus, a personal digital assistant, etc.

Referring to Fig. 14, the device 200 can include one or more of following components: a processing component 202, a memory 204, a power component 206, a multimedia component 208, an audio component 210, an input/output (I/O) interface 212, a sensor component 214 and a communication component 216.

The processing component 202 typically controls the overall operation of the device 200, such as operations associated with display, telephone calls, data communication, camera operations, and recording operations. The processing component 202 can include one or more processors 220 to execute instructions to complete all or part of the steps of the above method. In addition, the processing component 202 can include one or more modules to facilitate the interaction between the processing component 202 and other components. For example, the processing component 202 can include a multimedia module to facilitate interaction between the multimedia component 208 and the processing component 202.

The memory 204 is configured to store various types of data to support operations on the device 200. Examples of these data include instructions for any application program or method operated on the device 200, contact data, phone book data, messages, images, videos, etc. The memory 204 can be implemented by any type of volatile or non-volatile storage apparatus or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disc.

The power component 206 provides power to various components of the device 200. The power component 206 can include a power management system, at least one power supply, and other components associated with generating, managing, and distributing power for the device 200.

The multimedia component 208 includes a screen providing an output interface between the device 200 and a user. In some embodiments, the screen can include a liquid crystal display (LCD) and a touch panel (TP). If the screen includes the touch panel, the screen can be implemented as a touch screen to receive input signals from the user. The touch panel includes at least one touch sensor to sense touches, slides and gestures on the touch panel. The touch sensor can not only sense the boundaries of the touch or slide action, but also detect the wake-up time and pressure associated with the touch or slide operation. In some embodiments, the multimedia component 208 includes a front camera and/or a rear camera. The front camera and/or the rear camera can receive external multimedia data when the device 200 is in an operating mode, such as a shooting mode or a video mode. Each front camera and rear camera can be a fixed optical lens system or have a focal length and an optical zoom capability.

The audio component 210 is configured to output and/or input audio signals. For example, the audio component 210 includes a microphone (MIC) that is configured to receive external audio signals when the device 200 is in the operating mode, such as a call mode, a recording mode, and a speech recognition mode. The received audio signals can be further stored in the memory 204 or transmitted through the communication component 216. In some embodiments, the audio component 210 further includes a speaker for outputting the audio signals.

The Input/output (I/O) interface 212 provides an interface between the processing component 202 and a peripheral interface module, the peripheral interface module can be a keypad, a click wheel, a button, and the like. These buttons can include, but are not limited to, a home button, a volume button, a start button, and a lock button.

The sensor component 214 includes at least one sensor for providing state assessments of various aspects for the device 200. For example, the sensor component 214 can detect the on/off state of the apparatus 800, the relative positioning of components, such as a display and a keypad of the device 200. The sensor component 214 can also detect the position change of the device 200 or a component of the device 200, the presence or absence of user contact with the device 200, the orientation or acceleration/deceleration of the device 200 and the temperature change of the device 200. The sensor component 214 can include a proximity sensor configured to detect the presence of a nearby object without any physical contact. The sensor component 214 can also include an optical sensor, such as a CMOS or CCD image sensor, for use in imaging applications. In some embodiments, the sensor component 214 can also include an acceleration sensor, a gyroscope sensor, a magnetic sensor, a pressure sensor, or a temperature sensor.

The communication component 216 is configured to facilitate wired or wireless communication between the device 200 and other apparatus. The device 200 can access to a wireless network based on a communication standard, such as Wi-Fi, 2G or 3G, or a combination thereof. In an embodiment, the communication component 216 receives broadcast signals or broadcast-related information from an external broadcast management system via a broadcast channel. In an embodiment, the communication component 216 further includes a near field communication (NFC) module to facilitate short range communication. For example, NFC modules can be implemented based on Radio Frequency Identification (RFID) technology, Infrared Data Association (IrDA) technology, Ultra-Wide Band (UWB) technology, Bluetooth (BT) technology and other technologies.

In an embodiment, the device 200 can be implemented by at least one application specific integrated circuit (ASIC), digital signal processor (DSP), digital signal processing device (DSPD), programmable logic device (PLD), field programmable gate array (FPGA), controller, microcontroller, microprocessor, or another electronic element, for executing the above methods.

In embodiments, there is also provided a non-transitory computer-readable storage medium including instructions, such as the memory 204 including instructions, the instructions can be executed by the processor 220 of the device 200 to complete the above methods. For example, the non-transitory computer-readable storage medium can be a ROM, a random access memory (RAM), a CD-ROM, a magnetic tape, a floppy disk, and an optical data storage apparatus, etc.

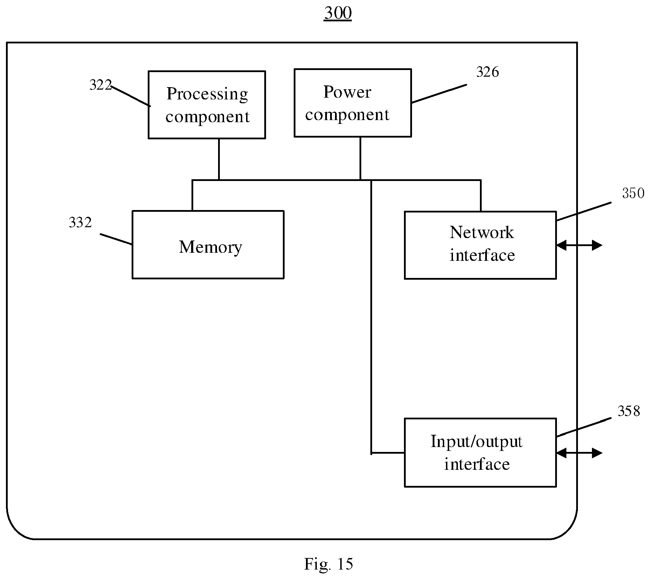

Fig. 15 is a block diagram of a calling device 300 according to an embodiment of the present invention. For example, the device 300 can be provided as a server. Referring to Fig. 15, the device 300 includes a processing component 322, which further includes one or more processors, as well as memory resources represented by a memory 332, for storing instructions that can be executed by the processing component 322, such as application programs. The application programs stored in the memory 332 can include one or more modules, each of which corresponds to a set of instructions. In addition, the processing component 322 is configured to execute instructions to execute the above method.

The device 300 can further include a power component 326 configured to execute the power management of the device 300, a wired or wireless network interface 350 configured to connect the device 300 to the network, and an input output (I/O) interface 358. The device 300 can operate an operating system based on storage in the memory 332, such as a Windows ServerTM, a Mac OS XTM, a UnixTM, a LinuxTM, a FreeBSDTM, or similar.

In embodiments, there is also provided a non-transitory computer-readable storage medium including instructions, such as the memory 804 including instructions, the instructions can be executed by the processor 820 of the electronic apparatus 800 to complete the above methods. For example, the non-transitory computer-readable storage medium can be a ROM, a random access memory (RAM), a CD-ROM, a magnetic tape, a floppy disk, and an optical data storage apparatus, etc.

It can be understood that "a plurality of" in the present invention means two or more, and other quantifiers are similarly interpreted. The term "and/or," which describes the relationship of related objects, means that there are three kinds of relationships. For example, A and/or B can mean that A exists alone, A and B exist together, and B exists alone. The symbol "/"generally indicates that the associated objects are in an "or" relationship. The singular forms "a/an," "said" and "the" are also intended to include plural forms, unless clearly indicated otherwise in the context.

It can further understood that terms "first" and "second" are configured to describe various information, but these information should not be limited to these terms. These terms are only used to distinguish the same type of information from each other and do not indicate a specific order or importance. In fact, the expressions "first" and "second" can be used interchangeably. For example, without departing from the scope of the present invention, first information may also be called second information, and similarly, second information may also be called first information.

It can be further understood that terms such as "central," "longitudinal," "transverse," "front," "rear," "upper," "lower," "left," "right," "vertical," "horizontal," "top," "bottom," "inner" and the like should be construed to refer to the orientation as then described or as shown in the drawings under discussion. These relative terms are for convenience of description and do not require that the present invention be constructed or operated in a particular orientation.

It can be further understood that unless otherwise specified, the term "connection" includes direct connection between two members without other members, and indirect connection between two members through other members.

It can be further understood that although the operations are described in a specific order in the drawings in embodiments of the present invention, it should not be understood as requiring that these operations must be performed in a specific order or a serial order shown, or that all the operations shown must be performed to obtain a desired result. In certain circumstances, multitasking and parallel processing may be beneficial.

Other embodiments of the present invention will easily occur to those skilled in the art after considering the specification and practicing the present invention disclosed herein. This application is intended to cover any variations, uses or adaptations of the present invention, which follow the general principles of the present invention and include common sense or common technical means in this technical field that are not disclosed in the present invention.

It should be understood that the present invention is not limited to the precise structures described above and shown in the drawings, and various modifications and changes can be made without departing from its scope. The scope of the present invention is limited only by the scope of the appended claims.

## Claims

1. A calling method, comprising:
displaying (S11, S41) an incoming call notification corresponding to an incoming call request on a first apparatus and one or more eligible second apparatuses, in response to receiving the incoming call request by the first apparatus, wherein eligibility of the one or more eligible second apparatuses comprises a communication connection established between the first apparatus and the one or more eligible second apparatuses and operability on the incoming call request by the one or more eligible second apparatuses;
transferring a call corresponding to the incoming call request to a target apparatus and answering the call on the target apparatus (S13, S42), in response to determining (S12), by the first apparatus, that the incoming call request is to be answered on the target apparatus in a case that the incoming call notification is received on the target apparatus, wherein the target apparatus is the first apparatus or any of the one or more eligible second apparatuses, and
stopping display of the incoming call notification on an apparatus other than the target apparatus among the first apparatus and the one or more eligible second apparatuses, and **characterized by** displaying an icon on the first apparatus, in response to determining, by the first apparatus, that the incoming call request is answered on the target apparatus in the case that the incoming call notification is received on the target apparatus,
wherein the icon represents that the call is running in background;
displaying (S31) a call interface on the first apparatus in response to detecting that the icon is selected, wherein the call interface comprises a first controller configured to display and/or switch an apparatus in a current call;
displaying (S32) an apparatus list in response to the first controller being selected, wherein the apparatus list comprises a third apparatus for a user to select for call transfer, and the third apparatus comprises the one or more eligible second apparatuses; and
transferring (S33) the current call to the third apparatus and answering the call on the third apparatus, in response to that the third apparatus in the apparatus list is selected.

2. The calling method according to claim 1, wherein displaying (S11) the incoming call notification corresponding to the incoming call request on the first apparatus and the one or more eligible second apparatuses comprises:
in response to the first apparatus displaying the incoming call notification corresponding to the incoming call request, sending a first request to the one or more eligible second apparatuses to display the incoming call notification corresponding to the incoming call request on the one or more eligible second apparatuses, wherein the first request requests display of the incoming call notification.

3. The calling method according to claim 1, wherein the target apparatus is any of the one or more eligible second apparatuses, and answering the call on the target apparatus comprises:
collecting far-end audio data of the call based on a sound collection device of the first apparatus, and sending the far-end audio data to the target apparatus, to enable the target apparatus to invoke a sound playing device of the target apparatus to play the far-end audio data and invoke a sound collection device of the target apparatus to collect near-end audio data of the call (S21); and
obtaining the near-end audio data of the call collected by the sound collection device of the target apparatus, and sending the near-end audio data to a far-end apparatus of the call (S22).

4. The calling method according to claim 1, wherein the eligibility comprises at least one of:
the one or more eligible second apparatuses sharing a same account with the first apparatus;
Bluetooth of the one or more eligible second apparatuses and Bluetooth of the first apparatus being in an open state and within a discoverable range;
the one or more eligible second apparatuses and the first apparatus being in a same local area network; or
the first apparatus communicating with the one or more eligible second apparatuses through a network system.

5. The calling method according to claim 4, wherein the communication between the first apparatus and the one or more eligible second apparatuses through the network system comprises that the first apparatus and the one or more eligible second apparatuses perform secure transmission of call instructions, messages, and audio data based on a soft bus; discovery of the one or more eligible second apparatuses; and perform transfer of related data.

6. The calling method according to claim 1, wherein the target apparatus is one second apparatus selected from the one or more eligible second apparatuses, and displaying the incoming call notification corresponding to the incoming call request (S41) comprises:
receiving (S51) a first request sent by the first apparatus, in response to the first apparatus displaying the incoming call notification corresponding to the incoming call request, wherein the first request requests display of the incoming call notification; and
displaying (S52) the incoming call notification corresponding to the incoming call request on the one second apparatus, in response to the first request.

7. The calling method according to claim 6, wherein answering the call on the target apparatus comprises:
receiving (S61) far-end audio data sent by the first apparatus, wherein the far-end audio data is far-end audio data of the call collected by a sound collection device of the first apparatus;
invoking a sound playing device of the one second apparatus to play the far-end audio data, and invoking a sound collection device of the one second apparatus to collect near-end audio data of the call (S62); and
sending (S63) the near-end audio data of the call collected by the sound collection device of the one second apparatus to a far-end apparatus of the call through the first apparatus.

8. The calling method according to any one of claims 1 to 7, wherein a telephone collaboration service of the first apparatus sends the incoming call request to the one or more eligible second apparatuses; a telephone collaboration service of the one or more eligible second apparatuses sends request information to an incoming call display interface; and the incoming call notification is displayed on the incoming call display interface of the one or more eligible second apparatuses.

9. The calling method according to any one of claims 1 to 8, further comprising: displaying a call status bar on the first apparatus, and clicking the call status bar to switch to any of the one or more eligible second apparatuses.

10. The calling method according to any one of claims 1 to 9, further comprising: in response to the call being answered on one second apparatus of the one or more eligible second apparatuses, invoking a microphone and a speaker corresponding to the first apparatus and the one second apparatus through a virtualization audio apparatus service corresponding to the first apparatus and the one second apparatus.

11. A calling device, comprising:
a processor; and
a memory for storing instructions executable by the processor;
wherein the processor is configured to execute the instructions to execute the calling method according to any one of claims 1 to 10.

12. A non-transitory computer-readable storage medium, having stored therein instructions that, when executed by a processor of a mobile terminal, cause the mobile terminal to execute the calling method according to any one of claims 1 to 10.

## Patentansprüche

1. Ein Anrufverfahren, das folgende Schritte aufweist:
Anzeigen (S11, S41) einer Benachrichtigung über einen eingehenden Anruf, die einer eingehenden Anrufanforderung entspricht, auf einem ersten Gerät und einem oder mehreren auswählbaren zweiten Geräten ansprechend auf ein Empfangen der eingehenden Anrufanforderung durch das erste Gerät, wobei eine Auswählbarkeit des einen oder der mehreren auswählbaren zweiten Geräte eine Kommunikationsverbindung, die zwischen dem ersten Gerät und dem einen oder den mehreren auswählbaren zweiten Geräten hergestellt wird, und eine Betriebsfähigkeit hinsichtlich der eingehenden Anrufanforderung durch das eine oder die mehreren auswählbaren zweiten Geräte aufweist;
Weiterleiten eines Anrufs, der der eingehenden Anrufanforderung entspricht, an ein Zielgerät und Annehmen des Anrufs auf dem Zielgerät (S13, S42) ansprechend auf ein Bestimmen (S12), durch das erste Gerät, dass die eingehende Anrufanforderung auf dem Zielgerät anzunehmen ist in einem Fall, in dem die Benachrichtigung über einen eingehenden Anruf auf dem Zielgerät empfangen wird, wobei das Zielgerät das erste Gerät oder ein beliebiges des einen oder der mehreren auswählbaren zweiten Geräte ist, und
Stoppen einer Anzeige der Benachrichtigung über einen eingehenden Anruf auf einem anderen Gerät als dem Zielgerät unter dem ersten Gerät und dem einen oder den mehreren auswählbaren zweiten Geräten, und **gekennzeichnet durch** ein Anzeigen eines Bildzeichens auf dem ersten Gerät ansprechend auf ein Bestimmen, durch das erste Gerät, dass die eingehende Anrufanforderung auf dem Zielgerät anzunehmen ist in dem Fall, in dem die Benachrichtigung über einen eingehenden Anruf auf dem Zielgerät empfangen wird,
wobei das Bildzeichen darstellt, dass der Anruf im Hintergrund läuft;
Anzeigen (S31) einer Anrufschnittstelle auf dem ersten Gerät ansprechend auf ein Erfassen, dass das Bildzeichen ausgewählt ist, wobei die Anrufschnittstelle eine erste Steuerung aufweist, die dazu konfiguriert ist, ein Gerät in einem aktuellen Anruf anzuzeigen und/oder zu schalten;
Anzeigen (S32) einer Geräteliste ansprechend darauf, dass die erste Steuerung ausgewählt ist, wobei die Geräteliste ein drittes Gerät aufweist, das ein Benutzer zur Anrufweiterleitung auswählen kann, und das dritte Gerät das eine oder die mehreren auswählbaren zweiten Geräte aufweist; und
Weiterleiten (S33) des aktuellen Anrufs an das dritte Gerät und Annehmen des Anrufs auf dem dritten Gerät ansprechend darauf, dass das dritte Gerät in der Geräteliste ausgewählt ist.

2. Das Anrufverfahren gemäß Anspruch 1, bei dem das Anzeigen (S11) der Benachrichtigung über einen eingehenden Anruf, die der eingehenden Anrufanforderung entspricht, auf dem ersten Gerät und dem einen oder den mehreren auswählbaren zweiten Geräten folgenden Schritt aufweist:
ansprechend darauf, dass das erste Gerät die Benachrichtigung über einen eingehenden Anruf anzeigt, die der eingehenden Anrufanforderung entspricht, Senden einer ersten Anforderung an das eine oder die mehreren auswählbaren zweiten Geräte, um die Benachrichtigung über einen eingehenden Anruf, die der eingehenden Anrufanforderung entspricht, auf dem einen oder den mehreren auswählbaren zweiten Geräten anzuzeigen, wobei die erste Anforderung eine Anzeige der Benachrichtigung über einen eingehenden Anruf anfordert.

3. Das Anrufverfahren gemäß Anspruch 1, wobei das Zielgerät ein beliebiges des einen oder der mehreren auswählbaren zweiten Geräte ist und das Annehmen des Anrufs auf dem Zielgerät folgende Schritte aufweist:
Sammeln von Fernes-Ende-Audiodaten des Anrufs basierend auf einer Tonsammelvorrichtung des ersten Geräts und Senden der Fernes-Ende-Audiodaten an das Zielgerät, damit das Zielgerät eine Tonwiedergabevorrichtung des Zielgeräts aufrufen kann, um die Fernes-Ende-Audiodaten wiederzugeben, und eine Tonsammelvorrichtung des Zielgeräts aufrufen kann, um Nahes-Ende-Audiodaten des Anrufs zu sammeln (S21); und
Erhalten der Nahes-Ende-Audiodaten des Anrufs, die durch die Tonsammelvorrichtung des Zielgeräts gesammelt werden, und Senden der Nahes-Ende-Audiodaten an ein Fernes-Ende-Gerät des Anrufs (S22).

4. Das Anrufverfahren gemäß Anspruch 1, wobei die Auswählbarkeit zumindest eines der folgenden Merkmale aufweist:
das eine oder die mehreren auswählbaren zweiten Geräte teilen sich ein gleiches Konto mit dem ersten Gerät;
das Bluetooth des einen oder der mehreren auswählbaren zweiten Geräte und das Bluetooth des ersten Geräts befinden sich in einem offenen Zustand und innerhalb eines sichtbaren Bereichs;
das eine oder die mehreren auswählbaren zweiten Geräte und das erste Gerät befinden sich in einem gleichen lokalen Netzwerk; oder
das erste Gerät kommuniziert mit dem einen oder den mehreren auswählbaren zweiten Geräten über ein Netzwerksystem.

5. Das Anrufverfahren gemäß Anspruch 4, wobei die Kommunikation zwischen dem ersten Gerät und dem einen oder den mehreren auswählbaren zweiten Geräten über das Netzwerksystem den Schritt aufweist, dass das erste Gerät und das eine oder die mehreren auswählbaren zweiten Geräte eine sichere Übertragung von Anrufanweisungen, Nachrichten und Audiodaten basierend auf einem Soft-Bus durchführen; eine Erkennung des einen oder der mehreren auswählbaren zweiten Geräte durchführen; und eine Weiterleitung zugehöriger Daten durchführen.

6. Das Anrufverfahren gemäß Anspruch 1, wobei das Zielgerät ein zweites Gerät ist, das aus dem einen oder den mehreren auswählbaren zweiten Geräten ausgewählt ist, und das Anzeigen der Benachrichtigung über einen eingehenden Anruf, die der eingehenden Anrufanforderung (S41) entspricht, folgende Schritte aufweist:
Empfangen (S51) einer ersten Anforderung, die durch das erste Gerät gesendet wird, ansprechend darauf, dass das erste Gerät die Benachrichtigung über einen eingehenden Anruf anzeigt, die der eingehenden Anrufanforderung entspricht, wobei die erste Anforderung eine Anzeige der Benachrichtigung über einen eingehenden Anruf anfordert; und
Anzeigen (S52) der Benachrichtigung über einen eingehenden Anruf, die der eingehenden Anrufanforderung entspricht, auf dem einen zweiten Gerät, ansprechend auf die erste Anforderung.

7. Das Anrufverfahren gemäß Anspruch 6, wobei das Annehmen des Anrufs auf dem Zielgerät folgende Schritte aufweist:
Empfangen (S61) von Fernes-Ende-Audiodaten, die durch das erste Gerät gesendet werden, wobei die Fernes-Ende-Audiodaten Fernes-Ende-Audiodaten des Anrufs sind, die durch eine Tonsammelvorrichtung des ersten Geräts gesammelt werden;
Aufrufen einer Tonwiedergabevorrichtung des einen zweiten Geräts, um die Fernes-Ende-Audiodaten wiederzugeben, und Aufrufen einer Tonsammelvorrichtung des einen zweiten Geräts, um Nahes-Ende-Audiodaten des Anrufs zu sammeln (S62); und
Senden (S63) der Nahes-Ende-Audiodaten des Anrufs, die durch die Tonsammelvorrichtung des einen zweiten Geräts gesammelt werden, an ein Fernes-Ende-Gerät des Anrufs über das erste Gerät.

8. Das Anrufverfahren gemäß einem der Ansprüche 1 bis 7, wobei ein Telefonkooperationsdienst des ersten Geräts die eingehende Anrufanforderung an das eine oder die mehreren auswählbaren zweiten Geräte sendet; ein Telefonkooperationsdienst des einen oder der mehreren auswählbaren zweiten Geräte Anforderungsinformationen an eine Anzeigeschnittstelle für einen eingehenden Anruf sendet; und die Benachrichtigung über einen eingehenden Anruf auf der Anzeigeschnittstelle für einen eingehenden Anruf des einen oder der mehreren auswählbaren zweiten Geräte angezeigt wird.

9. Das Anrufverfahren gemäß einem der Ansprüche 1 bis 8, das ferner folgenden Schritt aufweist: Anzeigen einer Anrufstatusleiste auf dem ersten Gerät und Anklicken der Anrufstatusleiste, um zu einem beliebigen des einen oder der mehreren auswählbaren zweiten Geräte zu schalten.

10. Das Anrufverfahren gemäß einem der Ansprüche 1 bis 9, das ferner folgenden Schritt aufweist: ansprechend darauf, dass der Anruf auf einem zweiten Gerät des einen oder der mehreren auswählbaren zweiten Geräte angenommen wird, Aufrufen eines Mikrofons und eines Lautsprechers entsprechend dem ersten Gerät und dem einen zweiten Gerät über einen Virtualisierungsaudiogerätedienst entsprechend dem ersten Gerät und dem einen zweiten Gerät.

11. Eine Anrufvorrichtung, die folgende Merkmale aufweist:
einen Prozessor; und
einen Speicher zum Speichern von Anweisungen, die durch den Prozessor ausführbar sind;
wobei der Prozessor dazu konfiguriert ist, die Anweisungen auszuführen, um das Anrufverfahren gemäß einem der Ansprüche 1 bis 10 auszuführen.

12. Ein nicht flüchtiges computerlesbares Speichermedium, auf dem Anweisungen gespeichert sind, die bei Ausführung durch einen Prozessor eines mobilen Endgeräts bewirken, dass das mobile Endgerät das Anrufverfahren gemäß einem der Ansprüche 1 bis 10 ausführt.

## Revendications

1. Procédé d'appel, comprenant :
l'affichage (S11, S41) d'une notification d'appel entrant correspondant à une demande d'appel entrant sur un premier appareil et un ou plusieurs deuxièmes appareils éligibles, en réponse à la réception de la demande d'appel entrant par le premier appareil, dans lequel l'éligibilité de l'un ou des plusieurs deuxièmes appareils éligibles comprend une connexion de communication établie entre le premier appareil et l'un ou les plusieurs deuxièmes appareils éligibles, et une opérabilité sur la demande d'appel entrant par l'un ou les plusieurs deuxièmes appareils éligibles ;
le transfert d'un appel correspondant à la demande d'appel entrant vers un appareil cible et la prise d'appel sur l'appareil cible (S13, S42), en réponse à la détermination (S12), par le premier appareil, qu'on doit répondre à la demande d'appel entrant sur l'appareil cible dans un cas où la notification d'appel entrant est reçue sur l'appareil cible, dans lequel l'appareil cible est le premier appareil ou l'un quelconque de l'un ou des plusieurs deuxièmes appareils éligibles, et
l'arrêt de l'affichage de la notification d'appel entrant sur un appareil autre que l'appareil cible parmi le premier appareil et l'un ou les plusieurs deuxièmes appareils éligibles, et **caractérisé par** l'affichage d'une icône sur le premier appareil, en réponse à la détermination, par le premier appareil, qu'on répond à la demande d'appel entrant sur l'appareil cible dans le cas où la notification d'appel entrant est reçue sur l'appareil cible,
dans lequel l'icône indique que l'appel s'exécute en arrière-plan ;
l'affichage (S31) d'une interface d'appel sur le premier appareil en réponse à la détection que l'icône est sélectionnée, dans lequel l'interface d'appel comprend un premier contrôleur configuré pour afficher et/ou basculer un appareil lors d'un appel en cours ;
l'affichage (S32) d'une liste d'appareils en réponse à la sélection du premier contrôleur, dans lequel la liste d'appareils comprend un troisième appareil qu'un utilisateur peut sélectionner pour le transfert d'appel, et le troisième appareil comprend l'un ou les plusieurs deuxièmes appareils éligibles ; et
le transfert (S33) de l'appel en cours vers le troisième appareil et la prise d'appel sur le troisième appareil, en réponse au fait que le troisième appareil dans la liste des appareils est sélectionné.

2. Procédé d'appel selon la revendication 1, dans lequel l'affichage (S11) de la notification d'appel entrant correspondant à la demande d'appel entrant sur le premier appareil et sur l'un ou les plusieurs deuxièmes appareils éligibles comprend :
en réponse à l'affichage, par le premier appareil, de la notification d'appel entrant correspondant à la demande d'appel entrant, l'envoie d'une première demande à l'un ou les plusieurs deuxièmes appareils éligibles pour afficher la notification d'appel entrant correspondant à la demande d'appel entrant sur l'un ou les plusieurs deuxièmes appareils éligibles, dans lequel la première demande sollicite l'affichage de la notification d'appel entrant.

3. Procédé d'appel selon la revendication 1, dans lequel l'appareil cible est l'un quelconque de l'un ou des plusieurs deuxièmes appareils éligibles, et la prise d'appel sur l'appareil cible comprend :
la collecte de données audio d'extrémité distante de l'appel sur la base d'un dispositif de collecte de son du premier appareil, et l'envoie des données audio d'extrémité distante vers l'appareil cible, pour permettre à l'appareil cible d'invoquer un dispositif de lecture de son de l'appareil cible pour lire les données audio d'extrémité distante et invoquer un dispositif de collecte de son de l'appareil cible pour collecter des données audio d'extrémité proche de l'appel (S21) ; et
l'obtention des données audio de l'extrémité proche de l'appel, collectées par le dispositif de collecte de son de l'appareil cible, et l'envoie des données audio d'extrémité proche à un appareil d'extrémité distante de l'appel (S22).

4. Procédé d'appel selon la revendication 1, dans lequel l'éligibilité comprend au moins l'un :
de l'un ou des plusieurs deuxièmes appareils éligibles partageant un même compte avec le premier appareil ;
du Bluetooth de l'un ou des plusieurs deuxièmes appareils éligibles et du Bluetooth du premier appareil étant dans un état de réception et à l'intérieur d'une plage de détection ;
de l'un ou des plusieurs deuxièmes appareils éligibles et du premier appareil se trouvant sur le même réseau local ; ou
du premier appareil communiquant avec l'un ou les plusieurs deuxièmes appareils éligibles par l'intermédiaire d'un système de réseau.

5. Procédé d'appel selon la revendication 4, dans lequel la communication entre le premier appareil et l'un ou les plusieurs deuxièmes appareils éligibles par l'intermédiaire du système de réseau comprend la réalisation, par le premier appareil et l'un ou les plusieurs deuxièmes appareils éligibles, d'une transmission sécurisée d'instructions d'appel, de messages et de données audio sur la base d'un bus logiciel ; la détection de l'un ou des plusieurs deuxièmes appareils éligibles ; et la réalisation du transfert de données associées.

6. Procédé d'appel selon la revendication 1, dans lequel l'appareil cible est un deuxième appareil sélectionné parmi l'un ou les plusieurs deuxièmes appareils éligibles, et l'affichage de la notification d'appel entrant correspondant à la demande d'appel entrant (S41) comprend :
la réception (S51) d'une première demande envoyée par le premier appareil, en réponse à l'affichage par le premier appareil de la notification d'appel entrant correspondant à la demande d'appel entrant, dans lequel la première demande sollicite l'affichage de la notification d'appel entrant ; et
l'affichage (S52) de la notification d'appel entrant correspondant à la demande d'appel entrant sur le deuxième appareil, en réponse à la première demande.

7. Procédé d'appel selon la revendication 6, dans lequel la prise d'appel sur l'appareil cible comprend :
la réception (S61) de données audio d'extrémité distante envoyées par le premier appareil, dans lequel les données audio d'extrémité distante sont les données audio de l'extrémité distante de l'appel collectées par un dispositif de collecte de son du premier appareil ;
l'invocation d'un dispositif de lecture de son du deuxième appareil pour lire les données audio d'extrémité distante, et l'invocation d'un dispositif de collecte de son du deuxième appareil pour collecter des données audio d'extrémité proche de l'appel (S62) ; et
l'envoie (S63) des données audio d'extrémité proche de l'appel, collectées par le dispositif de collecte de son du deuxième appareil, vers un appareil d'extrémité distante de l'appel par l'intermédiaire du premier appareil.

8. Procédé d'appel selon l'une quelconque des revendications 1 à 7, dans lequel un service de collaboration téléphonique du premier appareil envoie la demande d'appel entrant à l'un ou les plusieurs deuxièmes appareils éligibles ; un service de collaboration téléphonique de l'un ou des plusieurs deuxièmes appareils éligibles envoie des informations de demande à une interface d'affichage d'appel entrant ; et la notification d'appel entrant est affichée sur l'interface d'affichage d'appel entrant de l'un ou des plusieurs deuxièmes appareils éligibles.

9. Procédé d'appel selon l'une quelconque des revendications 1 à 8, comprenant en outre : l'affichage d'une barre d'état d'appel sur le premier appareil, et le fait de cliquer sur la barre d'état d'appel pour basculer vers l'un quelconque de l'un ou des plusieurs deuxièmes appareils éligibles.

10. Procédé d'appel selon l'une quelconque des revendications 1 à 9, comprenant en outre : en réponse à la prise d'appel sur un deuxième appareil de l'un ou des plusieurs deuxièmes appareils éligibles, l'invocation d'un microphone et d'un haut-parleur correspondant au premier appareil et le deuxième appareil par l'intermédiaire d'un service de virtualisation d'appareil audio correspondant au premier appareil et au deuxième appareil.

11. Dispositif d'appel, comprenant :
un processeur ; et
une mémoire pour stocker des instructions exécutables par le processeur ;
dans lequel le processeur est configuré pour exécuter les instructions permettant d'exécuter le procédé d'appel selon l'une quelconque des revendications 1 à 10.

12. Support de stockage non transitoire lisible par ordinateur, présentant des instructions qui y sont stockées qui, lorsqu'elles sont exécutées par un processeur d'un terminal mobile, amènent le terminal mobile à exécuter le procédé d'appel selon l'une quelconque des revendications 1 à 10.
